# EUROPÄISCHE PATENTANMELDUNG

(11) **EP 2 233 813 A1**
(43) Veröffentlichungstag der Anmeldung: **29.09.2010**
(21) Anmeldenummer: 10002104.7
(22) Anmeldetag: 02.03.2010
(51) Int. Cl.: F16L 27/087, F16J 15/44

(54) **Drehdurchführung und Dichtelement für eine Drehdurchführung**

(30) Priorität: 12.03.2009 DE 102009012462
(71) Anmelder: Hytrac GmbH, 45139 Essen (DE)
(72) Erfinder: Bosse, Horst, 45130 Essen (DE); Pidde, Gerd, 44879 Bochum (DE); Trautmann, Nils, 45739 Oer-Erkenschwick (DE)
(74) Vertreter: Döpp, Ludger

(57) **Zusammenfassung**

Drehdurchführung für Fluidsysteme, zumindest beinhaltend mindestens ein Statorelement, mindestens ein Rotorelement sowie mindestens ein Dichtelement, das in einer umlaufenden Nut des Rotorelementes oder des Statorelementes angeordnet ist und über mindestens einen statischen und einen dynamischen Dichtbereich verfügt, wobei zumindest der dynamische Dichtbereich zur Erzeugung einer gezielten Leckage mit mindestens einer Ausnehmung versehen ist.

## Beschreibung

Die Erfindung betrifft eine Drehdurchführung für Fluidsysteme, zumindest beinhaltend mindestens ein Statorelement, mindestens ein Rotorelement sowie mindestens ein Dichtelement.

Die DE 38 06 931 A1 betrifft eine Drehdurchführung zur Übertragung von unter Druck stehenden Medien von einem stehenden in ein rotierendes Maschinenteil, wobei die Welle eine axiale und eine sich daran anschließende radiale Bohrung aufweist, die in einen Ringkanal eines mit Zuführungsbohrungen für das Medium versehenen Ringes oder Buchsen mündet, wobei zwischen Gehäuse und Welle eine Buchse vorgesehen ist, die gegenüber dem Gehäuse mit Dichtungen abgedichtet ist. Vorgeschlagen wird die Anordnung einer zwischen Gehäuse und Welle radial verschiebbaren Buchse, wobei zur radialen Verschiebbarkeit der Buchse der Spalt zwischen Gehäuse und Buchse durch elastische Dichtelemente überbrückt wird.

Durch die DE 101 25 991 A1 ist eine Drehdurchführung für ein Fluidsystem für ein Hydrauliksystem bekannt geworden, mit einem ersten als erster Rotor bezeichneten Drehelement und einem zweiten als Stator bezeichnetes Drehelement, die wenigstens teilweise zueinander koaxial und um eine erste Drehachse drehbar angeordnet sind, wobei ein drittes als zweiter Rotor bezeichnetes Drehelement mindestens teilweise zu einem Teil des Stators koaxial und zu diesem um eine zweite von der ersten Drehachse verschiedene zweite Drehachse drehbar angeordnet ist. Der Stator kann hierbei ebenfalls mehrteilig ausgebildet sein.

Dichtelemente, die beispielsweise als Rotationsdichtungen für Drehdurchführungen im Bereich von lastschaltenden Fahrgetrieben einer Baumaschine zum Einsatz gelangen, werden zum Teil erheblichen Drücken und Umfangsgeschwindigkeiten, aufgrund hoher Relativdrehzahlen der zu dichtenden Antriebselemente, ausgesetzt. Die Dichtelemente werden dabei über Fluiddrücke an die zu dichtenden Antriebselemente gepresst, wodurch sich bei gleichzeitiger Relativdrehzahl zwischen Dichtelement und Antriebselement Reibarbeit ergibt, die Wärme erzeugt. Wird diese Reibarbeit aufgrund hoher Relativdrehzahlen bzw. Umfangsgeschwindigkeiten des rotierenden Bauteils und/oder aufgrund hoher auf das Dichtelement wirkender Anpresskräfte über einen längeren Zeitraum wirksam, kann es geschehen, dass die einer Reibfläche zugewandte Dichtfläche des Dichtelementes überhitzt und keine ausreichende Standzeit des Dichtelementes gewährleistet werden kann. Die dauerhafte Belastbarkeit von Dichtelementen wird deswegen mit dem p-v-Faktor f = p * v bewertet, wobei p für den Fluiddruck in bar steht und v für die Umfangsgeschwindigkeit in m/s.

Ziel des Erfindungsgegenstandes ist es, eine Drehdurchführung bereit zu stellen, bei welcher ein Dichtelement zum Einsatz gelangt, das auch bei hohem p-v-Faktor lange Zeit belastbar ist und somit eine ausreichende Lebensdauer bei hohen Betriebdrücken und Umfangsgeschwindigkeiten aufweist.

Darüber hinaus soll ein Dichtelement, insbesondere einsetzbar im Bereich einer Drehdurchführung für Fluidsysteme, bereitgestellt werden, das gegenüber herkömmlichen Dichtelementen eine gleiche oder ähnliche Einbausituation aufweist, so dass gegenüber herkömmlichen Dichtelementen keine Verteuerung bei der Herstellung gegeben ist.

Dieses Ziel wird erreicht durch eine Drehdurchführung für Fluidsysteme, zumindest beinhaltend mindestens ein Statorelement, mindestens ein Rotorelement sowie mindestens ein Dichtelement, das in einer umlaufenden Nut des Rotorelementes oder des Statorelementes angeordnet ist und über mindestens einen statischen und einen dynamischen Dichtbereich verfügt, wobei zumindest der dynamische Dichtbereich zur Erzeugung einer gezielten Leckage mit mindestens einer Ausnehmung versehen ist.

Vorteilhafte Weiterbildungen der erfindungsgemäßen Drehdurchführung sind den zugehörigen gegenständlichen Unteransprüchen zu entnehmen.

Dieses Ziel wird auch erreicht durch ein Dichtelement für unter Druck stehende Fluidsysteme, insbesondere einsetzbar im Bereich einer Drehdurchführung, mit mindestens einem statischen sowie einem dynamischen Dichtbereich, wobei der dynamische Dichtbereich zur Erzeugung einer gezielten Leckage mit mindestens einer Ausnehmung versehen ist.

Vorteilhafte Weiterbildungen des Erfindungsgegenstandes sind den zugehörigen gegenständlichen Unteransprüchen zu entnehmen.

Mit dem Erfindungsgegenstand wird durch Erzeugung einer gezielten Leckage erreicht, dass die dynamische Dichtfläche des Dichtelementes geschmiert und gekühlt wird, um die Reibung zu reduzieren und einer Überhitzung entgegen zu wirken.

Drehdurchführungen, die beispielsweise in lastschaltbaren Fahrgetrieben im Baumaschinenbereich eingesetzt werden, müssen unter den eingangs angegebenen Bedingungen hoch belastbar sein, das heißt gleichzeitig bis zu 30 bar Fluiddruck und bis zu 16 m/s Umfangsgeschwindigkeit dauerhaft Stand halten, ohne Überschreitung von Betriebstemperaturen, die zum Ausfall der Antriebselemente führen können. Unter diesen Bedingungen sind Standzeiten von 10.000 Stunden einzuhalten. Dies wird durch die erfindungsgemäße Drehdurchführung sowie das ebenfalls erfindungsgemäße Dichtelement gewährleistet. Gegenüber dem Stand der Technik werden somit eine langlebige Drehdurchführung sowie ein ebenfalls langlebiges Dichtelement, insbesondere einsetzbar im Bereich einer Drehdurchführung, bereitgestellt.

Das Dichtelement kann mit Ausnehmungen folgenden Querschnitts versehen werden:
- Tasche mit vorgebbarer Tiefe, Breite und Länge
- Teilkreisausschnitt
- Dreieck
- Rechteck oder Quadrat
- asymmetrische Kontur
- spiralförmig ausgebildete Rille.

Der Erfindungsgegenstand ist anhand eines Ausführungsbeispiels in der Zeichnung dargestellt und wird wie folgt beschrieben. Es zeigen:
- Figur 1: Drehdurchführung mit im Stator eingebautem Dichtelement;
- Figur 2: Drehdurchführung mit im Rotor eingebautem Dichtelement;
- Figur 3: Dichtelement gemäß Figur 1 in unterschiedlichen Ansichten.

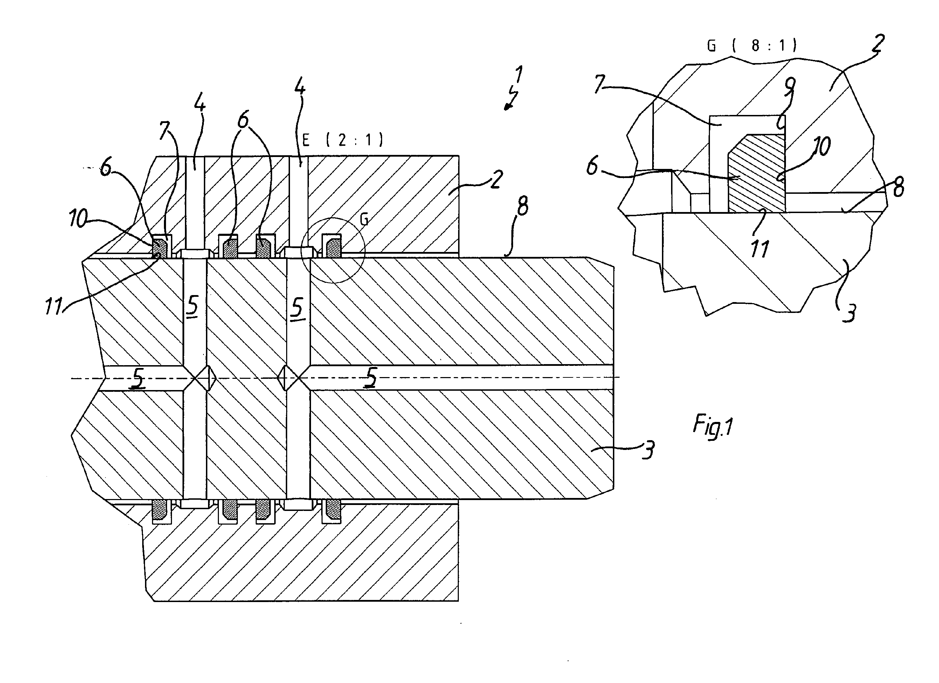

Figur 1 zeigt als Teildarstellung eine Drehdurchführung 1, auch als Ölverteiler bekannt, zumindest beinhaltend einen Stator 2 sowie einen Rotor 3, Ölführungskanäle 4 im Stator 2 sowie Ölführungskanäle 5 im Rotor 3. Über die Ölführungskanäle 4,5 kann Öl unter hohem Druck (bis 30 bar und höher) und relativ hohen Drehzahlen (bis 5.000 min.^{-1,} und mehr bei einem Wellendurchmesser von 60 mm und mehr ergeben sich Umfangsgeschwindigkeiten von ca. 16 m/s und mehr) vom Stator 2 in den Rotor 3 (bzw. umgekehrt) fließen. Der Stator 2 kann ein- oder mehrteilig ausgebildet sein, was vom jeweiligen Anwendungsfall abhängig gemacht wird.

In diesem Beispiel kommt ein im Wesentlichen als Rechteckring ausgebildetes Dichtelement 6 zum Einsatz, das in einer Umfangsnut 7 des Stators 2 positioniert wird. Der Querschnitt des Rechteckringes 6 hat im Hinblick auf seiner Höhe (Flächenbereich 10) und seiner Breite (Flächenbereich 11) unterschiedliche Abmessungen, so dass aufgrund des im Ölführungskanal 4 anstehenden Drucks das Dichtelement 6 mit unterschiedlichen Kräften jeweils an den Rotor und Stator gedrückt wird. Die unterschiedlichen Flächenverhältnisse werden daher das druckbeaufschlagte Dichtelement 6 gegenüber dem Stator 2 festsetzen, der mit der größeren Fläche des Dichtelements 6 korrespondiert. Im Ausführungsbeispiel der Figur 1 steht das Dichtelement 6 gegenüber dem Stator 2 fest, weil der an die Stirnfläche 9 des Stators 2 gedrückte Flächenbereich 10 größer gewählt wurde, als der Flächenbereich 11, der an den Rotor 3 gedrückt wird. In Folge der in diesem Ausführungsbeispiel gewählten Querschnittsform des Dichtelementes 6 wird also unter Druckeinwirkung das Dichtelement 6 einen statischen Dichtbereich an der Stirnfläche 9 der Umfangsnut 7 und einen dynamischen Dichtbereich im Flächenbereich 11 des Dichtelementes 6 gegenüber dem Rotor 3 aufbauen.

Wahlweise kann auch der Flächenbereich 11 größer gewählt werden als der Flächenbereich 10, wobei dann das Dichtelement 6 gegenüber dem Rotor 3 fest stehen und einen dynamischen Dichtbereich im Flächenbereich 10 und der Stirnfläche 9 des Stators 2 aufbauen würde (Alternative zu Figur 1). Die Querschnittsform des Dichtelementes 6 muss nicht zwangsläufig rechteckig sein, sie kann bedarfsweise auch dreieckig oder andersartig ausgebildet werden.

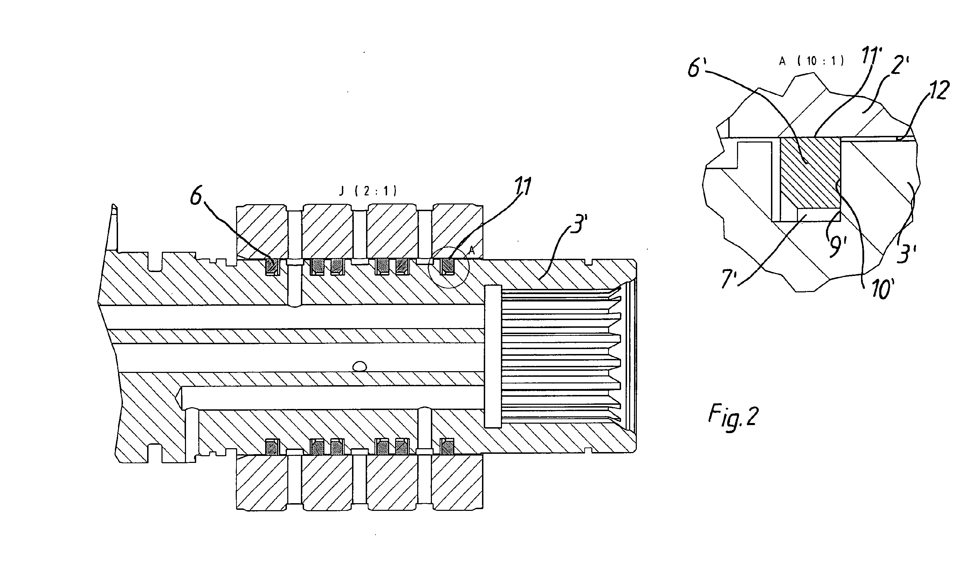

Figur 2 zeigt eine Alternative zu Figur 1. Das Dichtelement 6' ist in diesem Beispiel in einer Umfangsnut 7' des Rotors 3' positioniert. Aufgrund des größeren Flächenbereiches 10' gegenüber dem kleineren Flächenbereich 11' wird, ähnlich wie in Figur 1 beschrieben, in Folge des gegebenen Druckes das Dichtelement 6' statisch an die Stirnfläche 10' der Umfangsnut 7' gedrückt. Ein dynamischer Dichtbereich wird im Flächenbereich 11' des Dichtelementes 6' gegenüber dem Stator 2' aufgebaut.

Wahlweise kann auch hier der Flächenbereich 11' größer gewählt werden als der Flächenbereich 10', wobei dann das Dichtelement 6' gegenüber dem Rotor 3' einen dynamischen Dichtbereich im Flächenbereich 10' und der Stirnfläche 9' des Rotors 3' aufbauen würde (Alternative zu Figur 2).

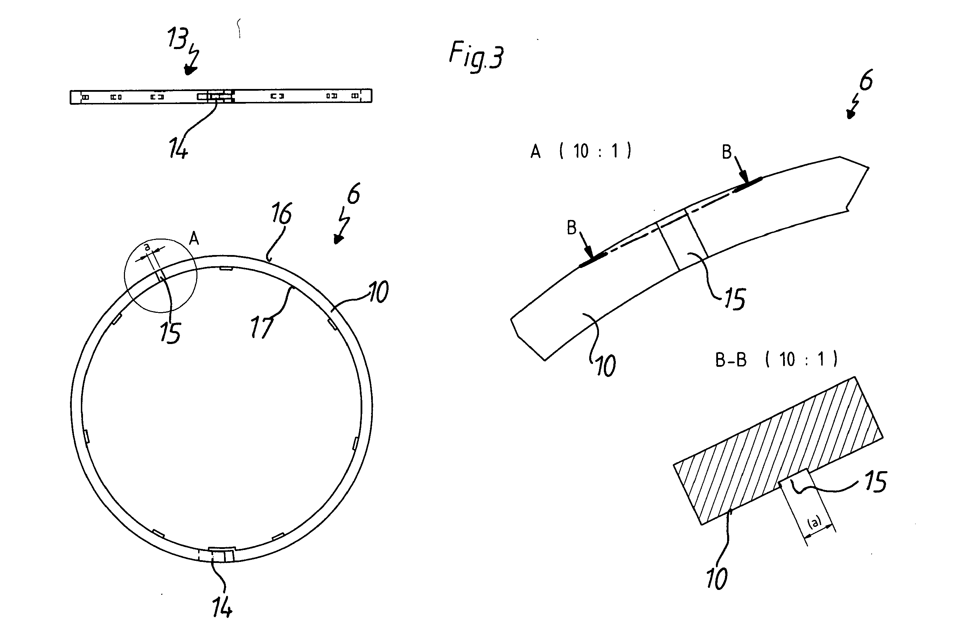

Figur 3 zeigt das erfindungsgemäße Dichtelement 6 bzw. 6' gemäß Figuren 1 und 2, wobei der Einfachheit halber auf die Figur 1 verwiesen wird. Figur 3 zeigt das Dichtelement 6 in verschiedenen Ansichten bzw. Schnitten. In diesem Ausführungsbeispiel ist das Dichtelement 6 zwar als einstückiges Bauteil konzipiert, wurde jedoch zur Ermöglichung der Montage mit einem Stoß 13 versehen. Derartige Stöße/Schlösser sind im Bereich von in Brennkraftmaschinen eingesetzten Kolbenringen bekannt. Zur Vermeidung von zu hohen Leckageverlusten wird der Stoß 13 hierbei mit einem in Figur 3 nur angedeuteten Schloss 14 ausgestattet. Die Leckageverluste dieses Stoßes 13/Schlosses 14 können gleichfalls als gezielte Leckage zum Kühlen und Schmieren des dynamischen Dichtbereiches verwendet werden, wenn sich der dynamische Dichtbereich am äußeren Kreisumfang des Dichtelements 6 befindet und wenn die konstruktiven Details zum Stoß 13/Schloss 14 eine entsprechende Geometrie ergeben.

Wie vorab erläutert, kommt es im dargelegten Anwendungsfall zu hoher Reibarbeit, bedingt durch hohe Umfangsgeschwindigkeiten des in Figur 1 dargestellten Rotors 3 relativ zum feststehenden Stator 2 in Verbindung mit den angesprochenen hohen Drücken, die die Standzeit des Dichtelementes 6 verringern und Belastungsgrenzen überschreiten können. In Figur 3 dargestellt ist eine auf der dynamischen Dichtfläche 10 (Alternative in Figur 1) vorgesehene Ausnehmung 15, die eine definierte Breite a sowie eine definierte Tiefe b hat. Die Ausnehmung 15 erstreckt sich von der äußeren Umfangsfläche 16 bis hin zur inneren Umfangsfläche 17 des Dichtelementes 6 und sorgt für eine gezielte Leckage, so dass die im dynamischen Dichtbereich 10 des Dichtelementes 6 gegebene hohe Temperatur durch das Leckageöl reduziert werden kann.

In diesem Beispiel ist lediglich eine einzelne Ausnehmung 15 dargestellt, wobei je nach Einsatzbereich des Dichtelementes 6 auch mehrere Ausnehmungen 15 bedarfsweise auch mit anderen Querschnittsformen, wie beispielsweise mindestens einer in Umfangsrichtung des Dichtelementes 6 verlaufenden Spirale denkbar sind.

Der Fachmann wird in Abhängigkeit vom Einsatzfall die geeignete Querschnittsform der Ausnehmung 15 vorsehen.

### Bezugszeichenliste

- 1: Drehdurchführung
- 2: Stator(element)
- 2': Stator(element)
- 3: Rotor (element)
- 3': Rotor (element)
- 4: Ölführungskanal
- 5: Ölführungskanal
- 6: Dichtelement
- 6': Dichtelement
- 7: Umfangsnut
- 7': Umfangsnut
- 8: äußere Umfangsfläche
- 9: Stirnfläche
- 9': Stirnfläche
- 10: statischer Dichtbereich (Flächenbereich)
- 10': statischer Dichtbereich (Flächenbereich)
- 11: dynamischer Dichtbereich (Flächenbereich)
- 11': dynamischer Dichtbereich (Flächenbereich)
- 12: Umfangsfläche
- 13: Stoß
- 14: Schloss
- 15: Ausnehmung
- 16: äußere Umfangsfläche
- 17: innere Umfangsfläche

### Alternativ:

- 10: dynamischer Dichtbereich
- 10': dynamischer Dichtbereich
- 11: statischer Dichtbereich
- 11': statischer Dichtbereich

## Patentansprüche

**1.** Drehdurchführung für Fluidsysteme, zumindest beinhaltend mindestens ein Statorelement (2,2'), mindestens ein Rotorelement (3,3') sowie mindestens ein Dichtelement (6,6'), das in einer umlaufenden Nut (7,7') des Rotorelementes (3') oder des Statorelementes (2) angeordnet ist und über mindestens einen statischen (10,10') und einen dynamischen Dichtbereich (11,11') verfügt, wobei zumindest der dynamische Dichtbereich (11,11') zur Erzeugung einer gezielten Leckage mit mindestens einer Ausnehmung (15) versehen ist.

**2.** Drehdurchführung nach Anspruch 1, **dadurch gekennzeichnet, dass** die Ausnehmung (15) nach Art einer Tasche mit vorgebbarer Breite (a), Tiefe (b) und Länge (16,17) ausgebildet ist.

**3.** Drehdurchführung nach Anspruch 1, **dadurch gekennzeichnet, dass** die Ausnehmung (15) die Form eines Teilkreisausschnittes beschreibt.

**4.** Drehdurchführung nach Anspruch 1, **dadurch gekennzeichnet, dass** die Ausnehmung (15) die Form eines Dreieckes beschreibt.

**5.** Drehdurchführung nach Anspruch 1, **dadurch gekennzeichnet, dass** die Ausnehmung (15) die Form eines Rechtecks oder Quadrates beschreibt.

**6.** Drehdurchführung nach Anspruch 1, **dadurch gekennzeichnet, dass** die Ausnehmung (15) eine asymmetrische Form beschreibt.

**7.** Dichtelement nach Anspruch 1, **dadurch gekennzeichnet, dass** die Ausnehmung (15) durch mindestens eine, sich insbesondere spiralförmig auf dem dynamischen Dichtbereich (11,11') erstreckende Rille vorgebbaren Querschnitts gebildet ist.

**8.** Drehdurchführung nach einem der Ansprüche 1 bis 7, **dadurch gekennzeichnet, dass** sich die Ausnehmung (15) von der äußeren Umfangsfläche (16) zur inneren Umfangsfläche (17) des Dichtelementes (6,6') erstreckt.

**9.** Drehdurchführung nach einem der Ansprüche 1 bis 8, **dadurch gekennzeichnet, dass** sich die Ausnehmung (15) am äußeren Kreisumfang des Dichtelements (6,6'), als integrierter Bestandteil der konstruktiven Details eines als Montagehilfe dienenden Stoßes (13) und/oder Schlosses (14) befindet.

**10.** Drehdurchführung nach einem der Ansprüche 1 bis 9, **dadurch gekennzeichnet, dass** das Dichtelement (6,6') als Rechteckring ausgebildet ist, und dass zumindest die einem Ölführungskanal (4,5) abgewandte Stirnfläche (10,10') des Dichtelements (6,6') mit der Ausnehmung (15) versehen ist.

**11.** Dichtelement für unter Druck stehende Fluidsysteme, insbesondere einsetzbar im Bereich einer Drehdurchführung (1), mit mindestens einem statischen (10,10') sowie einem dynamischen Dichtbereich (11,11'), wobei der dynamische Dichtbereich (11,11') zur Erzeugung einer gezielten Leckage mit mindestens einer Ausnehmung (15) versehen ist.

**12.** Dichtelement nach Anspruch 10, **dadurch gekennzeichnet, dass** die Ausnehmung (15) nach Art einer Tasche mit vorgebbarer Tiefe (b), Breite (a) und Länge (16,17) ausgebildet ist.

**12.** Drehdurchführung nach Anspruch 10, **dadurch gekennzeichnet, dass** die Ausnehmung (15) die Form eines Teilkreisausschnittes beschreibt.

**13.** Drehdurchführung nach Anspruch 10, **dadurch gekennzeichnet, dass** die Ausnehmung (15) die Form eines Dreieckes beschreibt.

**14.** Drehdurchführung nach Anspruch 10, **dadurch gekennzeichnet, dass** die Ausnehmung (15) die Form eines Rechtecks oder Quadrats beschreibt.

**15.** Drehdurchführung nach Anspruch 10, **dadurch gekennzeichnet, dass** die Ausnehmung (15) eine asymmetrische Form beschreibt.

**16.** Dichtelement nach Anspruch 10, **dadurch gekennzeichnet, dass** die Ausnehmung (15) durch mindestens eine zumindest partiell auf dem Dichtbereich (11,11') umlaufende, insbesondere spiralförmig ausgebildete, Rille ausgebildet ist.

**17.** Dichtelement nach einem der Ansprüche 10 bis 16, **dadurch gekennzeichnet, dass** sich die Ausnehmung (15) von der äußeren Umfangsfläche (16) bis zur inneren Umfangsfläche (17) erstreckt.

**18.** Dichtelement nach einem der Ansprüche 10 bis 17, **dadurch gekennzeichnet, dass** es mit einem Stoß (13) vorgebbarer Geometrie versehen ist.

**19.** Dichtelement nach einem der Ansprüche 10 bis 18, **dadurch gekennzeichnet, dass** es aus einem druck- und temperaturbeständigen polymeren Werkstoff erzeugt ist.

**20.** Dichtelement nach einem der Ansprüche 10 bis 19, **dadurch gekennzeichnet, dass** es aus einem teilkristallinen aromatischen Thermoplast erzeugt ist.

**21.** Dichtelement nach einem der Ansprüche 10 bis 19, **dadurch gekennzeichnet, dass** es aus einem Polyamid erzeugt ist.
